(19) Europäisches Patentamt
European Patent Office
Office européen des brevets

(11) **EP 0 790 727 A2**

(12) **EUROPÄISCHE PATENTANMELDUNG**

(43) Veröffentlichungstag:
20.08.1997 Patentblatt 1997/34

(51) Int. Cl.⁶: **H04L 25/03**

(21) Anmeldenummer: 97100483.3

(22) Anmeldetag: 15.01.1997

(84) Benannte Vertragsstaaten:
**CH DE FR GB IT LI NL SE**

(30) Priorität: **19.02.1996 CH 430/96**

(71) Anmelder: **ASCOM TECH AG**
**CH-3018 Bern (CH)**

(72) Erfinder: **Dettmar, Uwe**
**5522 Tägerig (CH)**

(74) Vertreter: **Roshardt, Werner Alfred, Dipl.-Phys. et al**
**Keller & Partner**
**Patentanwälte AG**
**Marktgasse 31**
**Postfach**
**3000 Bern 7 (CH)**

(54) **Verfahren zur Demodulation eines Empfangssignals**

(57) Bei einem Verfahren zur Demodulation eines Empfangssignals, welches neben den zu übertragenden Daten eine vorgegebene Synchronisationssequenz enthält, werden zur Schätzung eines Frequenzversatzes ($\xi$)

a) mindestens zwei nicht überlappende Teilsequenzen der Synchronisationssequenz abgegriffen (1),

b) mit Hilfe eines Least-square-Verfahrens (2, 3, 4, 5, 6, 7) die Koeffizienten der Kanalstossantwort zu jedem Beobachtungsfenster ermittelt und

c) der Frequenzversatz - in Form einer Phasendrehung $\xi$ pro Symbol - gemäss Formel I geschätzt.

Fig. 1

**Beschreibung**

**Technisches Gebiet**

Die Erfindung betrifft ein Verfahren zur Demodulation eines Empfangssignals, welches neben den zu übertragenden Daten eine vorgegebene Synchronisationssequenz enthält. Weiter betrifft die Erfindung eine Anordnung zur Durchführung des Verfahrens.

**Stand der Technik**

Bei modernen Datenübertragungsverfahren wird häufig eine im voraus bekannte Sequenz mit weitgehend idealen Korrelationseigenschaften als Präambel eingesetzt. Diese ermöglicht Rahmen- und Bitsynchronisation, eine Schätzung der Kanalkoeffizienten und eventuell das Training eines Equalizers.

In der Praxis kommt es aufgrund von Bauteiltoleranzen immer wieder zu einem Frequenzversatz zwischen den lokalen Oszilllatoren in Sender und Empfänger. Wird dieser Frequenzversatz bei der Demodulation nicht berücksichtigt, ist mit einer merklichen Verschlechterung der Performance der Datendetektion zu rechnen. Es sind deshalb schon verschiedene Verfahren für die Frequenzversatzschätzung vorgeschlagen worden. Bekannt ist z.B. die Verwendung einer Nichtlinearität für MSK-Signale (U. Lambrette und H. Meyr, "Two timing recovery algorithm for MSK", IEEE 1994 p1155/9), die Verwendung eines Potenzierverfahrens bei PSK-Signalen (S.N. Crozier, "Theoretical and simulated performance for a novel frequency estimation technique", Communication Research Center Ottawa, pp423-428) oder die Verwendung einer optimalen Synchronisationssequenz, welche das Trägersignal mit Hilfe einer Sequenz konstanter Daten überträgt (Oliver C. Mauss, Stefan Feuchtinger, "Low complexity digital down conversion and frequency correction scheme for burst mode digital radio", IEEE 1993, p621-625).

**Darstellung der Erfindung**

Aufgabe der Erfindung ist es, ein Verfahren der eingangs genannten Art anzugeben, das nicht auf ein bestimmtes Signalformat beschränkt ist und das die bei Störungen problematischen Nichtlinearitäten bekannter Verfahren vermeidet.

Gemäss der Erfindung besteht die Lösung darin, dass zur Schätzung eines Frequenzversatzes

a) mindestens zwei nicht überlappende Teilsequenzen der Synchronisationssequenz abgegriffen werden,
b) mit Hilfe eines Least-square-Verfahrens Koeffizienten je einer Kanalstossantwort für beide Teilsequenzen ermittelt werden und
c) der Frequenzversatz - in Form einer Phasendrehung pro Symbol - gemäss Gleichung I geschätzt wird.

Ein wesentlicher Vorteil der Erfindung besteht darin, dass auch mit in ihren Korrelationseigenschaften nicht-idealen Synchronisationssequenzen gearbeitet werden kann. Die Synchronisationssequenz ist nämlich oft durch einen technischen Standard vorgegeben, welcher bei der Implementation eines Signalempfängers zu berücksichtigen ist. Weiter ist zu beachten, dass eine Synchronisationssequenz als Ganzes durchaus ideale Autokorrelationseigenschaften haben kann, dass dies aber nicht für kürzere Ausschnitte (Teilsequenzen) einer solchen idealen Sequenz gilt.

Vorzugsweise wird im Sinn einer Vereinfachung der Frequenzversatz $\xi$ gemäss Gleichung VI berechnet. Der Rechenaufwand ist kleiner als bei der Schätzung gemäss Formel I. Eine wesentliche Performanceverschlechterung gegenüber der rechenaufwendigeren Schätzung muss dabei nicht hingenommen werden, wenn die Autokorrelationseigenschaften der Teilsequenzen nicht allzu stark vom Idealfall abweichen. In einer Anwendung, in welcher die Wahl der Synchronisationssequenz freisteht, können die Teilsequenzen im Sinn idealer Autokorrelationseigenschaften festgelegt bzw. abgegriffene werden. Die Schätzung gemäss Formel VI (bzw. XI) wird dann voll befriedigen.

Mit minimalem rechnerischen Zusatzaufwand kann auch die Kanalstossantwort **h** ermittelt werden. Gemäss der Erfindung werden dazu die Gleichungen VII-VIII verwendet. Eine Vereinfachung, die sich für Teilsequenzen mit guten (insbesondere idealen) Korrelationseigenschaften eignet, ergibt sich bei der Kanalschätzung gemäss Formel IX (bzw. XII).

Bei beiden Berechnungen der Kanalstossantwort kann eine weitere Reduktion des Rechenaufwandes dadurch erreicht werden, wenn die Kenntnis der Phase von **h** nicht benötigt wird. Dies ist vor allem dann der Fall, wenn die anschliessende Datendetektion mit einem Equalizer durchgeführt wird. Mit Vorteil wird dann einfach angenommen, dass die Kanalstossantwort **h** der im zweiten Fenster ermittelten Stossantwort **h[1]** entspricht. Der Anfang der Phasenverschiebung (welche durch den Frequenzversatz bedingt wird) ist dann auf die Mitte des Beobachtungsfensters gelegt. Mit anderen Worten, die Anfangsphase Formel

$$[(N+M)/2+i_1]\xi$$

ist in der geschätzten Kanalstossantwort eingeschlossen und wird durch den Equalizer kompensiert. Dadurch ergibt sich neben der Komplexitätsreduktion folgender Vorteil: Der Schätzfehler des Frequenzversatzes, ausgedrückt als Phasenoffset zwischen benachbarten Empfangssymbolen, akkumuliert sich bis zum Zeitpunkt der Phasenkorrektur. Die Annahme des Beginns der Phasenverschiebung in der Mitte des zweiten Fensters verringert somit den Wert des akkumulierten Schätzfehlers.

Die Teilsequenzen haben vorzugsweise eine Länge im Bereich von mehreren zehn Symbolen (z.B. 50): Die entsprechenden Beobachtungsfenster können im Prinzip unmittelbar aneinander anschliessen, haben aber vorzugsweise einen Abstand, der z.B. mindestens gleich gross wie die Länge einer Teilsequenz ist. Je grösser die Beobachtungsfenster sind, desto geringer ist der störende Einfluss des Rauschens.

Für die Eindeutigkeit von $\xi$ muss gelten: $-\pi/\xi < i_1-i_0 < \pi/\xi$. Falls Phasenverschiebung und Abstand der Beobachtungsfenster so gross sind, dass es zu einer Phasenmehrdeutigkeit kommt, können weitere Beobachtungsfenster zwischen die bei $i_0$ und $i_1$ beginnenden Fenster eingefügt werden, die ein Verfolgen der akkumulierten Phasenänderung ermöglichen. Dadurch können sowohl das Vorzeichen von $\xi$ als auch die Anzahl der Vielfachen von $2\pi$, die möglicherweise in $(i_1-i_0)\xi$ enthalten sind, bestimmt werden.

Eine Anordnung zur Durchführung des erfindungsgemässen Verfahrens verfügt über

a) einen Speicher für die vorgegebenen Symbole der Teilsequenzen,
b) einen Zwischenspeicher für die im Empfangssignal übertragenen Symbole,
c) eine Recheneinheit zur Ermittlung der Koeffizienten $\Theta[0]$ und $\Theta[1]$ entsprechend den Beobachtungsfenstern,
d) ein Verzögerungsglied (insbesondere ein Schieberegister) zur Verzögerung der Koeffizienten $\Theta[1]$ entsprechend dem zeitlichen Abstand der Beobachtungsfenster und
e) eine Rechenschaltung zur Ermittlung des Frequenzversatzes gemäss Gleichung I.

Bei nicht idealen Teilsequenzen wird zudem ein Speicher für die im voraus berechenbaren Werte der Matrix $\Phi$ und eine Rechenschaltung zur Auswertung der Gleichung II eingesetzt. Im übrigern können zur Durchführung der beschriebenen bevorzugten Verfahren einfach die entsprechenden Formeln einprogrammiert werden.

Weitere vorteilhafte Ausführungsformen und Merkmalskombinationen ergeben sich aus der nachfolgenden Detailbeschreibung und der Gesamtheit der Patentansprüche.

**Kurze Beschreibung der Zeichnungen**

Die zur Erläuterung der Ausführungsbeispiele verwendeten Zeichnungen zeigen:

Fig. 1    Ein Blockschaltbild eines erfindungsgemässen Empfängers mit Schätzung des Frequenzversatzes und der Kanalstossantwort;

Fig. 2    ein Blockschaltbild einer für nicht ideale Synchronisationssequenzen zusätzlich verwendeten Rechenschaltung;

Fig. 3    ein Blockschaltbild zur Bestimmung des Frequenzversatzes;

Fig. 4    ein Blockschaltbild einer Schaltungsanordnung zur Berechnung der Vektorgrösse $\Theta^*$ für die Beobachtungsfenster.

In den Figuren sind gleiche Teile mit gleichen Bezugszeichen versehen.

**Wege zur Ausführung der Erfindung**

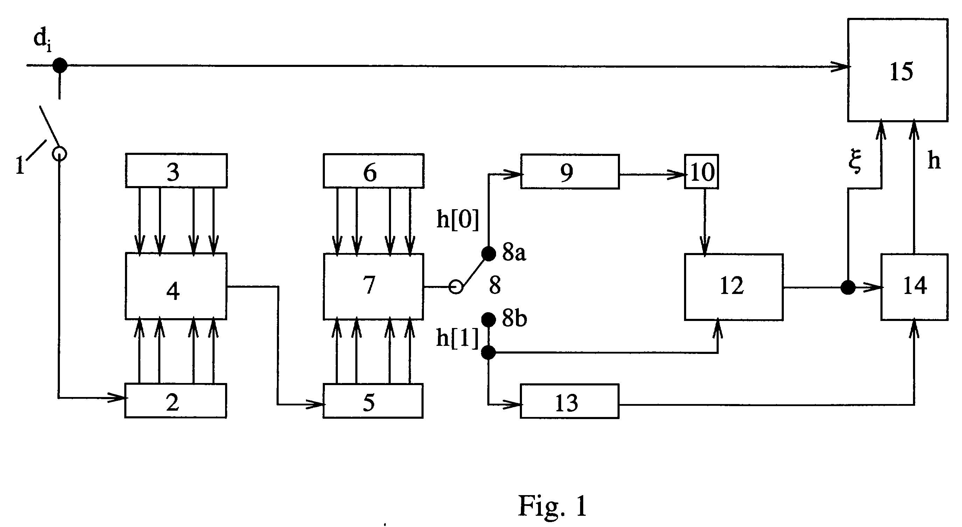

Fig. 1 zeigt beispielhaft ein Blockschaltbild eines erfindungsgemässen Empfängers (Basisbanddarstellung). Die Detektion der empfangenen Symbole $d_i$ erfolgt z.B. mit einem Equalizer 15 oder einer anderen an sich bekannten Detektionsschaltung. Die eigentlichen Daten sind angeführt durch eine sog. Synchronisationssequenz. Es handelt sich dabei um eine vorgegebene Sequenz von Symbolen, welche dem Empfänger im voraus bekannt sind. Die Synchronisationssequenz hat z.B. eine Länge von 400 Symbolen. Gemäss der Erfindung werden mit einem Schalter 1 z.B. zwei Teilsequenzen der Synchronisationssequenz abgetastet. Die Teilsequenzen definieren entsprechende Beobachtungsfenster. Sie dürfen sich nicht überlagern.

Für die nachfolgende Beschreibung wird folgende Konvention vorausgesetzt: Die Symbole der Synchronisationssequenz tragen den Index i, welcher z.B. von 1-400 läuft (Gesamtlänge der Synchronisationssequenz). Die erste Teilsequenz beginnt bei einem im voraus bestimmten Index $i_0$ und läuft bis $i_0+N-1$. Sinngemäss läuft die zweite Teilsequenz von $i_1$ bis $i_1+N-1$. N bezeichnet also die Länge der beiden Teilsequenzen bzw. Beobachtungsfenster.

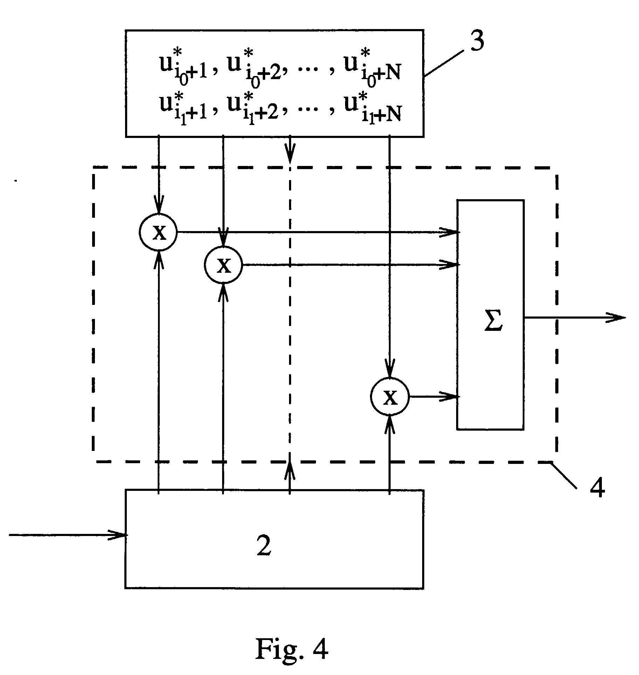

Wie auch aus Fig. 4 ersichtlich ist, werden die abgetasteten Symbole $d_i$ in einen Zwischenspeicher 2 gegeben. Ein Festwertspeicher 3 enthält die im voraus bekannten Symbolwerte $u^*_{i0+1}$ bis $u^*_{i0+N}$ der ersten Teilsequenz und die Werte $u^*_{i1+1}$ bis $u^*_{i1+N}$ der zweiten. Mit der Rechenschaltung 4 wird nun die Formel V ausgewertet. M bezeichnet die Anzahl der (berücksichtigten) Koeffizienten der Kanalstossantwort. Es resultieren also zwei Vektoren $\Theta^*[0]$ und $\Theta^*[1]$. $\Theta^*[0]$ bezeichnet dabei die zum ersten Abtastfenster $[i_0]$ und $\Theta^*[1]$ die zum zweiten Abtastfenster $[i_1]$ gehörenden Werte. Der Stern steht für konjugiert komplex.

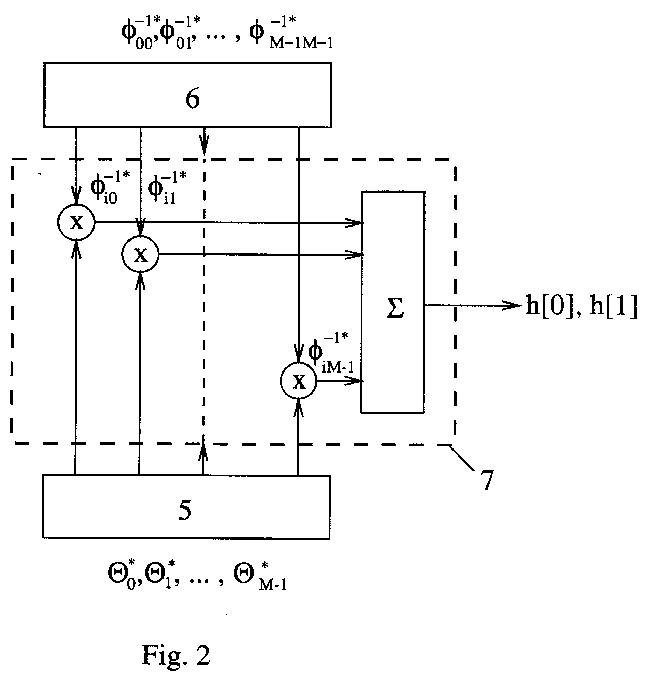

In der nachfolgenden Stufe (vgl. auch Fig. 2) werden die Koeffizienten $h[0]$ und $h[1]$ der Kanalstossantwort in den beiden Beobachtungsfenstern berechnet. Zu diesem Zweck werden die Werte $\Theta^*[0]$ und $\Theta^*[1]$ in einen Zwischenspeicher 5 abgelegt. Ein Festwertspeicher 6 enthält die Matrixwerte $\Phi_{t,k}$ gemäss Gleichung III. Wie bereits erwähnt, sind die Symbole $u_i$ der Teilsequenzen im voraus bekannt, so dass die genannten Matrixwerte $\Phi_{t,k}$ bei der Implementierung der Empfängerschaltung berechnet werden können. Mit einer Rechenschaltung 7 kann also für beide Beobachtungsfenster aus der invertierten Matrix $\Phi^{-1^*}$ der Koeffizientenvektor $h$ gemäss Gleichung II berechnet werden.

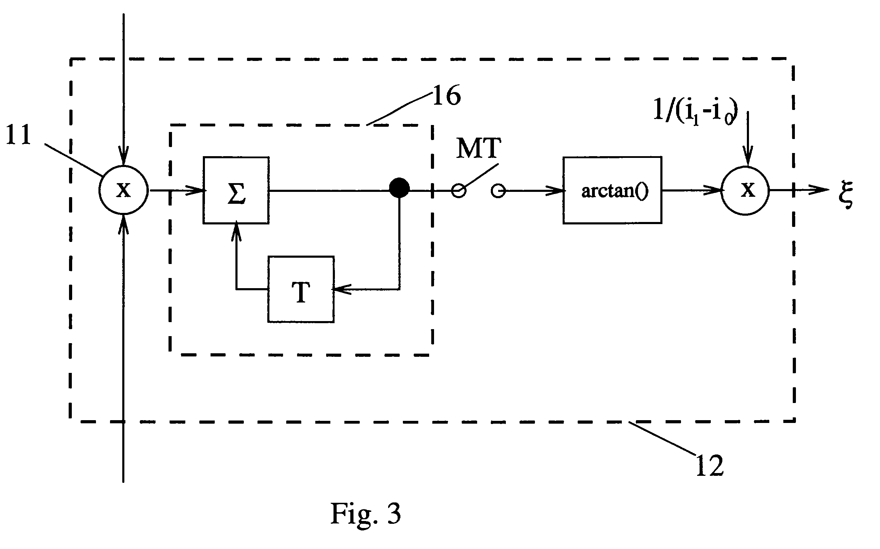

Ein Umschalter 8 (ausgangsseitig der Rechenschaltung 7) steht zuerst in einer Schalterposition 8a und übergibt alle Koeffizienten $h[0]$ an ein Verzögerungsglied 9. Danach wird auf die Schalterposition 8b umgeschaltet, in welcher die Koeffizienten $h[1]$ sowohl an den Multiplizierer 11 (vgl. Fig. 3) als auch an ein Verzögerungsglied 13 gegeben werden. Das Verzögerungsglied 9 hält die Koeffizienten für eine Zeitdauer $(i_1-i_0)T$ zurück (T=Symboldauer). Dann werden die Koeffizienten des ersten Abtastfensters über eine Schaltung 10, welche die konjugiert komplexen Werte bildet, an den Multiplizierer 11 in der Rechenschaltung 12 gegeben. Mit einem Akkumulator 16 werden M Werte aufsummiert. Es resultiert ein komplexer Wert, von welchem das Argument (z.B. mit der Arctan-Funktion) bestimmt wird. Nach einer Multiplikation mit dem Konstantwert $1/(i_1-i_0)$ resultiert die gesuchte Phasendrehung $\xi$ pro Symbol (Frequenzversatz). Mit der Rechenschaltung 12 wurde also die Gleichung I ausgewertet.

Mit den bis anhin beschriebenen Teilen der Schaltungsanordnung wurden die Formeln I bis V ausgewertet.

Um eine Schätzung der Kanalstossantwort $h$ zu ermitteln, werden die Koeffizienten $h[1]$ mit einem Verzögerungsglied 13 um ein M-faches der Symboldauer T verzögert. In einer Rechenschaltung 14 wird schliesslich auf der Basis des geschätzten Frequenzversatzes der Koeffizientenvektor $h$ gemäss den Gleichungen VII und VIII bestimmt.

Die soeben beschriebene Ausführungsform ist im Prinzip für beliebige Synchronisationssequenzen geeignet. Für Teilsequenzen mit guten oder sogar idealen Autokorrelationseigenschaften können die Abläufe vereinfacht werden. Kurz gesagt, fällt die Zwischenstufe mit der Rechenschaltung 7 weg. Mathematisch gesprochen geht es da nur noch um die Auswertung der Formeln VI und IX.

Alternativ können dann auch die Korrelationskoeffizienten $R_k$ nach Formel (X) ermittelt werden, um daraus die Phasendrehung $\xi$ und die Koeffizienten der Impulsantwort $h$ nach den Formeln (XI) und (XII) zu berechnen.

Die zuerst beschriebenen Ausführungsbeispiele unterscheiden sich vom zuletzt beschriebenen dadurch, dass im einen Fall die im Speicher 3 enthaltene Sequenz und im anderen die im Speicher 2 enthaltene länger ist. Es wird jeweils die kürzere Sequenz über die längere "geschoben". Somit kann die Berechnung der Korrelationskoeffizienten $R_k$ der Zwischenspeicher 2 eingespart werden.

Auf die Rechenschaltung 14 kann verzichtet werden, wenn es genügt, die relative Grösse der Koeffizienten der Kanalstossantwort zu kennen. Der Equalizer 15 kann z.B. eine entsprechende konstante Phasenschiebung der Symbole mitberechnen.

Der Zwischenspeicher 2 kann z.B. als einfaches Schieberegister ausgebildet sein. Das heisst, die empfangenen Symbole $d_i$ werden - im Sinn einer Korrelation - über die abgespeicherten Teilsequenzen geschoben.

Von Vorteil ist, wenn die Beobachtungsfenster so gewählt werden, dass $\Phi[0]=\Phi[1]$ ist.

Das erfindungsgemässe Verfahren wird mit Vorteil durch einen speziellen DSP (Digital Signal Processor) durchgeführt.

Zusammenfassend ist festzuhalten, dass durch die Erfindung ein Verfahren zur Schätzung des Frequenzversatzes und wahlweise der Kanalstossantwort geschaffen worden ist, welches im wesentlichen unabhängig vom Signalformat ist. Entsprechend breit ist der Einsatzbereich dieses Verfahrens.

Formeln

$$\xi = \frac{1}{i_1 - i_0} \arg\left\{ \mathbf{h}^T(1)\mathbf{h}^*(0) \right\} \qquad\qquad\qquad \text{I}$$

$$\mathbf{h}^* = \Phi^{-1}\Theta \qquad\qquad\qquad \text{II}$$

$$\Phi_{t,k} = \sum_{i=M}^{N} u_{i-k}\, u^*_{i-t}, \qquad 0 \le t,k \le M-1 \qquad\qquad \text{III}$$

$$\Theta = (\Theta_0, \Theta_{-1}, ..., \Theta_{-(M+1)})^T \qquad\qquad \text{IV}$$

$$\Theta_{-k} = \sum_{i=M}^{N} u_{i-k},\, d^*_i, \qquad 0 \le k \le M-1 \qquad\qquad \text{V}$$

$$\xi = \frac{1}{i_1 - i_0} \arg\{\Theta^H(1)\Theta(0)\} \qquad\qquad \text{VI}$$

$$h = h(0)\exp(-ji_1\xi)(N - M + 1)/K^* \qquad\qquad \text{VII}$$

$$K = \frac{\exp(-j(N+1)\xi) - \exp(-jM\xi)}{\exp(-j\xi) - 1} \qquad\qquad \text{VIII}$$

$$h = \Theta^*(1)\exp(-ji_i\xi)/K^* \qquad\qquad \text{IX}$$

$$R_k = \sum_{i=M}^{N} u_i d^*_{i+k}, \qquad 0 \le k \le M - 1 \qquad\qquad (\text{X})$$

$$\xi = \frac{1}{i_1 - i_0} \arg\left\{ \mathbf{R}^H[1]\mathbf{R}[0] \right\} \qquad\qquad (\text{XI})$$

$$\mathbf{h} = \mathbf{R}^*[1]\exp(-ji_1\xi)/\mathcal{K}^* \qquad\qquad (\text{XII})$$

**Patentansprüche**

1. Verfahren zur Demodulation eines Empfangssignals, welches neben den zu übertragenden Daten eine vorgegebene Synchronisationssequenz enthält, dadurch gekennzeichnet, dass zur Schätzung eines Frequenzversatzes $\xi$

   a) mindestens zwei nicht überlappende Teilsequenzen ($d_{i0}$ bis $d_{i0+N}$; $d_{i1}$ bis $d_{i1+N}$) der Synchronisationssequenz abgegriffen werden,
   b) mit Hilfe eines Least-square-Verfahrens Koeffizienten $\mathbf{h}[0]$, $\mathbf{h}[1]$ je einer Kanalstossantwort für beide Teilsequenzen ($d_{i0}$ bis $d_{i0+N}$; $d_{i1}$ bis $d_{i1+N}$) ermittelt werden und

c) der Frequenzversatz $\xi$ - in Form einer Phasendrehung pro Symbol - gemäss Gleichung I geschätzt wird.

2. Verfahren nach Anspruch 1, dadurch gekennzeichnet, dass im Sinn einer Vereinfachung der Frequenzversatz gemäss Formel VI ermittelt wird.

3. Verfahren nach einem der Ansprüche 1 oder 2, dadurch gekennzeichnet, dass die Koeffizienten **h** der Kanalstossantwort gemäss Formel VII geschätzt werden.

4. Verfahren nach einem der Ansprüche 1 oder 2, dadurch gekennzeichnet, dass die Koeffizienten **h** der Kanalstossantwort gemäss Formel IX geschätzt werden.

5. Verfahren nach einem der Ansprüche 1 bis 4, dadurch gekennzeichnet, dass drei oder mehr nicht überlappende Teilsequenzen abgegriffen werden.

6. Verfahren nach Anspruch 1, dadurch gekennzeichnet, dass die Koeffizienten h gemäss Formel XII und der Frequenzversatz $\xi$ gemäss Formel XI ermittelt werden.

7. Anordnung zur Durchführung des Verfahrens nach Anspruch 2, mit

   a) einem Speicher (3) für die vorgegebenen Symbole der Teilsequenzen,
   b) einem Zwischenspeicher (2) für die im Empfangssignal übertragenen Symbole ($d_i$),
   c) einer Rechenschaltung (4) zur Ermittlung der Koeffizienten **h[0]** und **h[1]** der mindestens zwei Beobachtungsfenster,
   d) einen Verzögerungsglied (9) zur Verzögerung der Koeffizienten **h[0]** entsprechend einem zeitlichen Abstand $(i_1-i_0)T$ der Beobachtungsfenster und
   e) einer Rechenschaltung (12) zur Berechnung des Frequenzversatzes gemäss Formel VI oder XI.

8. Anordnung nach Anspruch 7, dadurch gekennzeichnet, dass zusätzlich ein Speicher (6) und eine Rechenschaltung (7) zur Auswertung der Gleichung II vorgesehen sind.

Fig. 1

$$\phi_{00}^{-1*}, \phi_{01}^{-1*}, \dots, \phi_{M-1M-1}^{-1*}$$

Fig. 2

Fig. 3

Fig. 4